# EUROPEAN PATENT APPLICATION

(11) **EP 4 506 686 A1**
(43) Date of publication of application: **12.02.2025**
(21) Application number: 23190176.0
(22) Date of filing: 08.08.2023
(51) Int. Cl.: G01N 29/265, G01N 29/30

(54) **REDUNDANT ROBOTIC SETUP FOR NON-DESTRUCTIVE TESTING BASED ON MULTIPLE POSITIONABLE TESTING DEVICE**

(71) Applicant: Baker Hughes Holdings LLC, Houston, TX 77073 (US)
(72) Inventor: WERNER, Daniel, Houston, 77073 (US); FRANZEN, Andreas, Houston, 77073 (US); HENRIX, Frank, Houston, 77073 (US); BUSCHKE, Paul, Houston, 77073 (US); KAHMANN, Frank, Houston, 77073 (US)
(74) Representative: Illingworth-Law, William Illingworth

(57) **Abstract**

An inspection system and method of using the same are provided. The inspection system can include a first inspection apparatus including a first robotic arm, and a first inspection unit rotably coupled to the first robotic arm at a first connection, wherein the first inspection unit includes a first plurality of sensors arranged to inspect at least first portion of an asset. The inspection system can also include a second inspection apparatus including a second robotic arm and a second inspection unit rotably coupled to the second robotic arm at a second connection, wherein the second inspection unit includes a second plurality of sensors arranged to inspect at least a second portion of the asset.

## Description

### FIELD

Redundant inspection apparatuses, systems and methods for non-destructive testing (NTD) are provided.

### BACKGROUND

Robotic systems equipped with specialized sensors can be used in industries such as manufacturing to efficiently and accurately evaluate the structural integrity of various assets. These robotics systems can identify potential defects or anomalies, and make informed decisions on maintenance and repairs. This technology not only improves safety and reduces downtime but also significantly enhances the overall efficiency and reliability of asset management.

### SUMMARY

In one aspect, an inspection system is provided. In some embodiments the inspection system can include a first inspection apparatus including a first robotic arm and a first inspection unit rotably coupled to the first robotic arm at a first connection. The first inspection unit can include a first plurality of sensors arranged to inspect at least first portion of an asset. The inspection system can also include a second inspection apparatus including a second robotic arm and a second inspection unit rotably coupled to the second robotic arm at a second connection. The second inspection unit can include a second plurality of sensors arranged to inspect at least a second portion of the asset.

In some embodiments, the first plurality of sensors and the second plurality of sensors each can include at least one of an ultrasonic probe, an eddy current probe and a camera.

In some embodiments the first inspection apparatus and the second inspection apparatus may be identical and may be each arranged to inspect the first portion of the asset and the second portion of the asset.

In some embodiments, the inspection system can include a computing system including at least one data processor and a memory storing instructions which, when executed by the at least one processor, cause the at least one processor to perform operations including: determining a status of the first inspection apparatus and the second inspection apparatus of the inspection system, the status including one of an operational status or a non-operational status. Responsive to determining that the status of the first inspection apparatus and the second inspection apparatus are operational, the processor can perform the steps of: positioning, by the first robotic arm, the first plurality of sensors on the first portion of an asset and positioning, by the second robotic arm, the second plurality of sensors on the second portion of the asset. The processor can also perform the steps of acquiring, by the first plurality of sensors and the second plurality of sensors, a first plurality of measurements of the first portion of the asset and a second plurality of measurements of the second portion of the asset. The processor can also perform the steps of providing, by the at least one processor, the first plurality of measurements and the second plurality of measurements.

In some embodiments, the first inspection apparatus and the second inspection apparatus can further include at least one monitoring sensor including at least one of a vibration sensor, a temperature sensor, a pressure sensor, a proximity sensor, an accelerometer, and a camera, communicatively coupled to the computing system and arranged to monitor the status of the first inspection apparatus and the second inspection apparatus, wherein the at least one processor to perform operations further including: receiving, from the at least one monitoring sensor, data characterizing the status of the first inspection apparatus and the second inspection apparatus.

In some embodiments, the at least one processor can perform operations further including: responsive to determining that the status of the second inspection apparatus is non-operational, performing the steps of: positioning, by the first robotic arm, the first plurality of sensors of the first inspection apparatus on the first portion of the asset and acquiring, by the first plurality of sensors, the first plurality of measurements of the first portion of the asset. Also, responsive to determining that the status of the second inspection apparatus is non-operational, performing the steps of: positioning, by the first robotic arm, the first plurality of sensors of the first inspection apparatus on the second portion of the asset and acquiring, by the first plurality of sensors, the second plurality of measurements of the first portion of the asset.

In some embodiments, the at least one processor can also perform operations further including: positioning, by the first robotic arm, the first plurality of sensors of the first inspection apparatus on the second portion of an asset and positioning by the second robotic arm, the second plurality of sensors of the second inspection apparatus on the first portion of the asset. The at least one processor can also perform operations further including: acquiring, by the first plurality of sensors and the second plurality of sensors, a third plurality of measurements of the first portion of the asset and a fourth plurality of measurements of the second portion of the asset. The at least one processor can also perform operations further including: comparing the first plurality of measurements to the third plurality of measurements, and the second plurality of measurements to the fourth plurality of measurements and determining the status of the first inspection apparatus and the second inspection apparatus based on the comparing.

In some embodiments, the at least one processor may be configured to perform operations including providing, by the first inspection unit, a coupling medium between the first plurality of sensors and the first portion of the asset and providing, by the second inspection unit, the coupling medium between the second plurality of sensors and the second portion of the asset.

In some embodiments, the asset may be a wheel, including a first wheel, a second wheel, and an axel extending there between, and the at least one processor may be configured to perform operations further including positioning, by the first robotic arm, the first plurality of sensors on the first wheel and a first half of the axel at a first angle relative to a vertical axis extending perpendicularly to a central axis of the axel and positioning, by the second robotic arm, the second plurality of sensors on the second wheel and a second half of the axel at a second angle relative to a vertical axis extending perpendicularly to a central axis of the axel. In some embodiments, the second angle may be different from the first angle.

In another aspect, a method is provided. In some embodiments, the method can include determining, by at least one processor of a computing system of an inspection system, a status of a first inspection apparatus and a second inspection apparatus of the inspection system, the status including one of an operational status or a non-operational status, wherein the first inspection apparatus can include a first robotic arm and a first inspection unit rotably coupled to the first robotic arm at a first connection, the first inspection unit including a first plurality of sensors and the second inspection apparatus can include a second robotic arm and a second inspection unit rotably coupled to the second robotic arm at a second connection, the second inspection unit including a second plurality of sensors. In some embodiments the method can include, responsive to determining that the status of the first inspection apparatus and the second inspection apparatus are be operational, positioning, by the first robotic arm, a first plurality of sensors of the first inspection apparatus on a first portion of an asset and positioning, by the second robotic arm, a second plurality of sensors of the second inspection apparatus on a second portion of the asset. In some embodiments the method can also include: acquiring, by the first plurality of sensors and the second plurality of sensors, a first plurality of measurements of the first portion of the asset and a second plurality of measurements of the second portion of the asset. The method can also include providing, by the at least one processor, the first plurality of measurements and the second plurality of measurements.

In some embodiments, the first inspection apparatus and the second inspection apparatus can further include at least one monitoring sensor including at least one of a vibration sensor, a temperature sensor, a pressure sensor, a proximity sensor, an accelerometer, and a camera, communicatively coupled to the computing system and arranged to monitor the status of the first inspection apparatus and the second inspection apparatus. In this embodiment, the method can further include receiving, from the at least one monitoring sensor, data characterizing the status of the first inspection apparatus and the second inspection apparatus.

In some embodiments, responsive to determining that the status of the second inspection apparatus may be non-operational, the method can include: positioning, by the first robotic arm, the first plurality of sensors of the first inspection apparatus on the first portion of the asset and acquiring, by the first plurality of sensors, the first plurality of measurements of the first portion of the asset. The method can also include positioning, by the first robotic arm, the first plurality of sensors of the first inspection apparatus on the second portion of the asset and acquiring, by the first plurality of sensors, the second plurality of measurements of the first portion of the asset.

In some embodiments, the method can include positioning, by the first robotic arm, the first plurality of sensors of the first inspection apparatus on the second portion of an asset, positioning, by the second robotic arm, the second plurality of sensors of the second inspection apparatus on the first portion of the asset and acquiring, by the first plurality of sensors and the second plurality of sensors, a third plurality of measurements of the first portion of the asset and a fourth plurality of measurements of the second portion of the asset. The method can also include comparing, by the at least one processor, the first plurality of measurements to the third plurality of measurements, and the second plurality of measurements to the fourth plurality of measurements and determining, by at least one processor, the status of the first inspection apparatus and the second inspection apparatus based on the comparing.

In some embodiments, the method can include providing a coupling medium between the first plurality of sensors and the first portion of the asset and providing the coupling medium between the second plurality of sensors and the second portion of the asset.

In some embodiments, the asset may be a wheel, including a first wheel, a second wheel, and an axel extending there between and the method can further include positioning, by the first robotic arm, the first plurality of sensors on the first wheel and a first half of the axel at a first angle relative to a vertical axis extending perpendicularly to a central axis of the axel and positioning, by the second robotic arm, the second plurality of sensors on the second wheel and a second half of the axel at a second angle relative to a vertical axis extending perpendicularly to a central axis of the axel. In some embodiments, the second angle may be different from the first angle.

In another aspect, a non-transitory computer readable medium (CRM) storing computer readable instructions is provided. In some embodiments, the non-transitory CRM storing computer readable instructions, when executed by a data processor, cause the data processor to perform operations including determining a status of a first inspection apparatus and a second inspection apparatus of the inspection system, the status including one of an operational status or a non-operational status, wherein the first inspection apparatus can include a first robotic arm and a first inspection unit rotably coupled to the first robotic arm at a first connection, the first inspection unit including a first plurality of sensors and the second inspection apparatus can include a second robotic arm and a second inspection unit rotably coupled to the second robotic arm at a second connection, the second inspection unit including a second plurality of sensors. Responsive to determining that the status of the first inspection apparatus and the second inspection apparatus are operational, the instructions can cause the data processor to perform operations including positioning, by the first robotic arm, a first plurality of sensors of the first inspection apparatus on a first portion of an asset and positioning, by the second robotic arm, a second plurality of sensors of the second inspection apparatus on a second portion of the asset. In some embodiments the instructions can also cause the data processor to perform operations including acquiring, by the first plurality of sensors and the second plurality of sensors, a first plurality of measurements of the first portion of the asset and a second plurality of measurements of the second portion of the asset and providing the first plurality of measurements and the second plurality of measurements.

In some embodiments, responsive to determining that the status of the second inspection apparatus is be non-operational, the computer readable instructions, when executed by the data processor, can cause the data processor to perform operations further including positioning, by the first robotic arm, the first plurality of sensors of the first inspection apparatus on the first portion of the asset and acquiring, by the first plurality of sensors, the first plurality of measurements of the first portion of the asset. In some embodiments, responsive to determining that the status of the second inspection apparatus is be non-operational, the computer readable instructions, when executed by the data processor, can cause the data processor to perform operations further including positioning, by the first robotic arm, the first plurality of sensors of the first inspection apparatus on the second portion of the asset and acquiring, by the first plurality of sensors, the second plurality of measurements of the first portion of the asset.

In some embodiments, the computer readable instructions, when executed by the data processor, cause the data processor to perform operations further including positioning, by the first robotic arm, the first plurality of sensors of the first inspection apparatus on the second portion of an asset and positioning, by the second robotic arm, the second plurality of sensors of the second inspection apparatus on the first portion of the asset. The computer readable instructions, when executed by the data processor, can also cause the data processor to perform operations further including acquiring, by the first plurality of sensors and the second plurality of sensors, a third plurality of measurements of the first portion of the asset and a fourth plurality of measurements of the second portion of the asset. The computer readable instructions, when executed by the data processor, can also cause the data processor to perform operations further including comparing, by the at least one processor, the first plurality of measurements to the third plurality of measurements, and the second plurality of measurements to the fourth plurality of measurements and determining, by at least one processor, the status of the first inspection apparatus and the second inspection apparatus based on the comparing.

In some embodiments, the computer readable instructions, when executed by the data processor, can cause the data processor to perform operations further including providing a coupling medium between the first plurality of sensors and the first portion of the asset and providing the coupling medium between the second plurality of sensors and the second portion of the asset.

In some embodiments, the asset may be a wheel, including a first wheel, a second wheel, and an axel extending there between, and the computer readable instructions, when executed by the data processor, can cause the data processor to perform operations further including positioning, by the first robotic arm, the first plurality of sensors on the first wheel and a first half of the axel at a first angle relative to a vertical axis extending perpendicularly to a central axis of the axel and positioning, by the second robotic arm, the second plurality of sensors on the second wheel and a second half of the axel at a second angle relative to a vertical axis extending perpendicularly to a central axis of the axel. In some embodiments, the second angle may be different from the first angle.

### BRIEF DESCRIPTION OF THE DRAWINGS

These and other features will be more readily understood from the following detailed description taken in conjunction with the accompanying drawings, in which:
FIG. 1 is perspective view of a configuration of a redundant inspection system, including a pair of redundant inspection apparatuses according to the subject matter described herein;
FIG. 2 is a perspective view of another configuration if the redundant inspection system of FIG. 1, with inspection units thereof coupled to an asset being inspected;
FIG. 3A is a side view of the asset of FIG. 2 as seen from the central axis B of the asset, with the sensors coupled to the asset in a first configuration;
FIG. 3B is a side view of the asset of FIG. 2 as seen from the central axis B of the asset, with the sensors coupled to the asset in a second configuration;
FIG. 4 is a partial perspective view of the configuration of the inspection system as seen in FIG. 2, with inspection units thereof coupled to the asset being inspected, in a case where both inspection apparatuses are operational;
FIG. 5 is a perspective view of another configuration of the redundant inspection system of FIG. 1 in a case where one inspection apparatus of the pair is non-operational;
FIG. 6 is diagram illustrating ultrasonic probes of an inspection system coupled to an asset;
FIG. 7 is a flow diagram illustrating a method of operating an inspection system as described herein; and
FIG. 8 is a block diagram of a computing system suitable for use in implementing the computerized components of the redundant inspection system of FIG. 1 according to the subject matter described herein.

It is noted that the drawings are not necessarily to scale. The drawings are intended to depict only typical aspects of the subject matter disclosed herein, and therefore should not be considered as limiting the scope of the disclosure.

### DETAILED DESCRIPTION

Traditionally, in industries such as aircraft, rail and trains, oil and gas, etc., robotic systems are implemented to carry out non-destructive testing (NTD) of assets. The use of robotic systems increases automation and flexibility, to increase production/inspection speed and reduce cycle time or inspection time. However, in traditional production processes, as well as for NDT inspection, robotic systems can lack redundancy, which can result in downtime and delays, in the event of a system failure.

An improved redundant robotic system for use in NTD inspection, as well as a method of use, are provided herein. The redundant robotic system described herein can include a split inspection unit, including first and second inspection apparatuses, which are capable of each inspecting at least a portion of an asset, while also being capable of individually inspecting the whole asset in the event that either the first or second inspection apparatus fails. The first and second inspection apparatuses can each include a plurality of sensors configured to inspect an asset. The plurality of sensors can include, for example, ultrasonic sensors, eddy current sensors, cameras, etc. When both the first and second inspection apparatuses are operating, they can carry out an inspection of the asset efficiently, in tandem. However, in the event that one inspection apparatus fails, one inspection unit can be inspect a first portion of the asset, and then move to a second portion of the asset and inspect the second portion, to independently provide a comprehensive inspection of the asset.

Additionally, in some embodiments, the redundant robotic system described herein is capable of providing an operator with an internal system status check. In some embodiments, the status check can be provided by having the first inspection apparatus inspect the whole asset, and having the second inspection apparatus inspect the whole asset, and compare the two data sets for consistency. In this case, if a difference between the two data sets is lower than a predefined limit, the internal system status check can determine that the robotic system is functioning properly. The system status check can provide substantial benefits in system status determination and maintenance.

Advantageously, the systems and methods described herein provide the capability of avoiding production/inspection standstills in the event of individual inspection apparatus failure. Accordingly, in the event that an individual inspection apparatus experiences a failure, the other inspection apparatus is capable of executing the entirety of the inspection independently, while maintenance or repair is performed on the other inspection apparatus. Further, the system redundancy described herein allows for integrated status condition self-testing, by allowing the measurements from the redundant inspection apparatuses to be compared to one another for consistency.

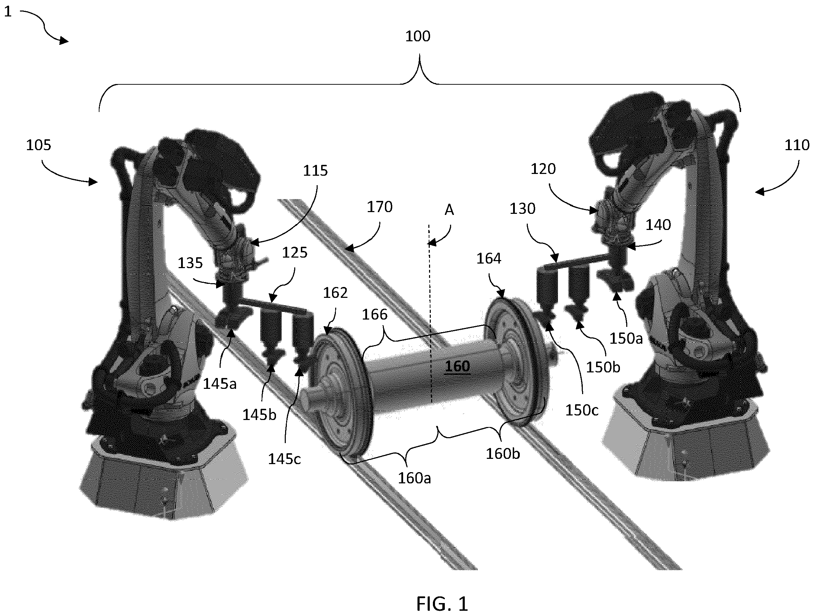

FIG. 1 is a perspective view of a configuration 1 of a redundant inspection system 100 according to the subject matter described herein. In some embodiments, the inspection system 100 can include a first inspection apparatus 105 and a second inspection apparatus 110. In some embodiments, the first and second inspection apparatuses 105, 110 can be identical. The first and second inspection apparatuses 105, 110 can each include robotic arms 115, 120, and inspection units 125, 130 rotably coupled to the robotic arms 115, 120 at connections 135, 140. In some embodiments, the connections 135, 140 can be placed on the inspection units 125, 130 as shown in FIG. 1, however, in some embodiments, the connections 135, 140 can be placed over the center of mass of the inspection units 125, 130. For example, connections 135, 140 can be placed directly over sensors 145b, 150b, respectively, so that the moments about the connections 135, 140 produced by the inspection units 125, 130 are zero. Further, each inspection unit 125, 130 can include a first and second plurality of sensors 145a-145c and 150a-150c, respectively, and can further include cardanic mounts, guide bars, springs, etc. (not shown), to aid in coupling of the plurality of sensors to the asset during inspection. The plurality of sensors 145a-145c, 150a-150c can include, for example, ultrasonic probes, eddy current probes, cameras, or the like. The inspection system 100 can be configured to inspect an asset 160. For example, in some cases, the asset 160 can be a wheel, as shown in FIG. 1, including a first wheel portion 162, a second wheel portion 164, and an axle 166 extending there between. The first wheel portion 162 and the second wheel portion 164 can each include an external face, an internal face, a wheel disc, a rim, a tread and a hub. In some embodiments, the asset 160 can be placed on a track 170 during an inspection. In this case, the first and second inspection apparatuses 105, 110 can be arranged on opposite sides of the track 170. However, the first and second inspection apparatuses 105, 110 can also be placed on the same side of the track 170. The asset 160 can be symmetrical about an axis A, extending perpendicularly through a center of the axle 166, dividing the asset 160 into a first portion 160a and a second portion 160b.

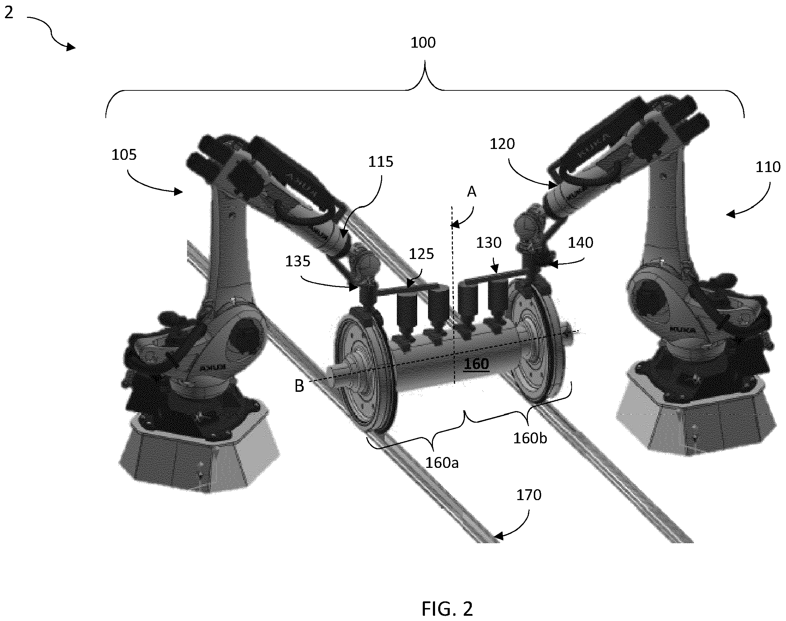

FIG. 2 is a perspective view of a configuration 2 wherein the inspection system 100 is coupled to the asset 160 to perform an inspection operation. The inspection system 100 of FIG. 2 is the same as that of FIG. 1, accordingly, like components will not be described. During an inspection, when both inspection apparatuses 105, 110 are operational, the inspection system 100 can be configured to move the robotic arms 115, 120 and the inspection units 125, 130 to couple to the asset 160. In some embodiments, the inspection system 100 can further include at least one computing system configured to automatically control the inspection system 100, including the movement of the robotic arms 115, 120 and rotation of the inspection units 125, 130 about the connections 135, 140, to align inspection units 125, 130 with the first portion 160a and the second portion 160b. The computing system is discussed in greater detail below. However, the inspection system 100 can also be controlled remotely by an operator. When the inspection units 125, 130 are positioned on the asset 160, the plurality of sensors 145a-145c, 150a-150c can be configured to couple to the asset 160 at a plurality of locations along the asset 160. In some embodiments, the plurality of sensors 145a-145c, 150a-150c can be configured to couple to the asset 160 along a straight line positioned directly above a central axis B of the asset 160. However, in some embodiments, the plurality of sensors 145a-145c, 150a-150c can be configured to couple to the asset 160 at differing angles relative to the central axis B, to minimize interference, as discussed in greater detail below. Once the plurality of sensors 145a-145c, 150a-150c are coupled to the asset, the inspection system can be configured to carry out an inspection of the asset using both inspection units 125, 130 in parallel, as discussed in greater detail below.

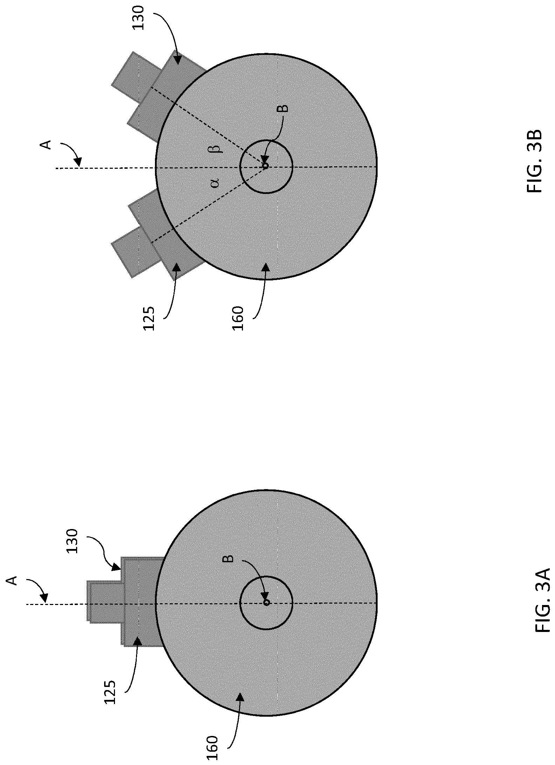

FIGS. 3A-3B are side views of the asset 160 of FIG. 2 as seen from the central axis B of the asset 160. As shown in FIG. 3A, in some embodiments, the plurality of sensors 145a-145c and 150a-150c can both be coupled to the asset 160 directly above the central axis B, parallel to axis A. However, as shown in FIG. 3B, in some embodiments, the plurality of sensors 145a-145c and 150a-150c can be coupled to the asset 160 at differing angles relative to the axis A. For example, sensors 145a-145c can be configured to couple to the asset 160 at an angle a, relative to axis A, and sensors 150a-150c can be configured to couple to the asset 160 at an angle β, relative to axis A. By coupling the plurality of sensors 145a-145c and 150a-150c at differing angles relative to the axis A, interference between the signals emitted from sensors 145a-145c and sensors 150a-150s can be minimized.

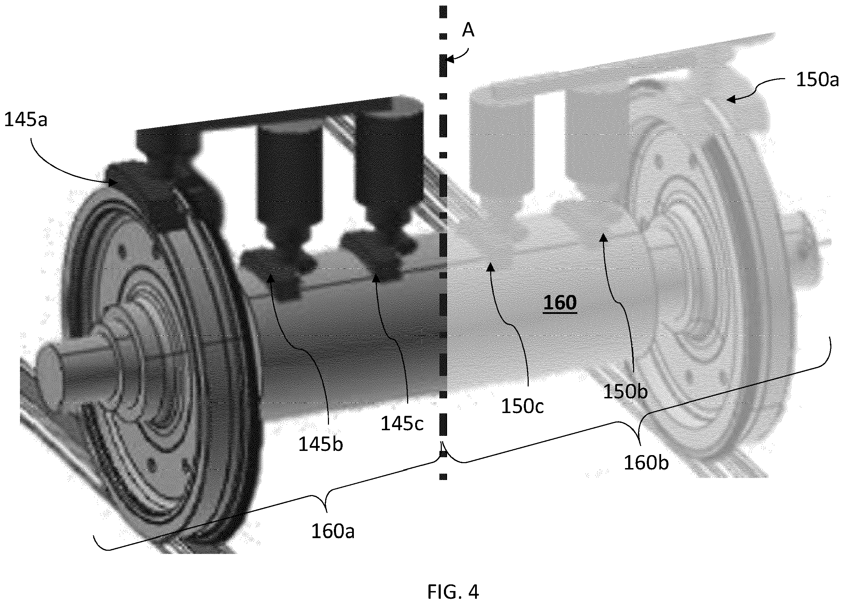

FIG. 4 is a partial perspective view of the configuration 2 of the inspection system 100 illustrating the case where both inspection units 125, 130 are operational, as they are positioned on the asset 160. As shown in FIG. 4, the plurality of sensors 145a-145c, 150a-150c can be configured to couple to the asset 160 at a plurality of locations along the asset 160, with the first plurality of sensors 145a-145c coupled to the first portion 160a and the second plurality of sensors 150a-150c coupled to the second portion 160b. For example, in some embodiments, the asset 160 can be a wheel of a train. In this case the sensors 145a and 150a can be configured to couple to the first wheel portion 162, the second wheel portion 164, respectively, to inspect the wheel portions 162, 164 for defects. Similarly, in this case, the sensors 145b, 145c, 150b, 150c can be configured to symmetrically couple to the axle 166 to inspect the axle for defects. In some embodiments, some or all of the sensors 145a-145c, 150a-150c can use a coupling medium (e.g., water) to effectively couple to the asset 160 during inspection. In some embodiments, the coupling medium can be provided between the first plurality of sensors and the first portion of the asset and between the second plurality of sensors and the second portion of the asset by a first and second couplant delivery system (not shown) of the first and second inspection apparatuses, respectfully. Further, in some embodiments, the inspection system can further include an asset lifting and rotating device (not shown), integrated with the inside track of the track 170. In this case, once the plurality of sensors 145a-145c, 150a-150c are coupled to the asset 160, an inspection can be carried out by performing one full rotation of the asset 160 to validate the coupling of the plurality of sensors 145a-145c, 150a-150c on the asset. Once coupling is validated, the inspection can further include performing a second full rotation of the asset 160 to obtain inspection measurements. Accordingly, by having both the first inspection apparatus 105 and the second inspection apparatus 110 operational and working in parallel, inspection time can be reduced.

Further, in some embodiments, to ensure that both the first and second inspection apparatuses 105, 110 are calibrated properly, the asset 160 can be a test/calibration asset having known specifications and defects. If the first and second inspection apparatuses 105, 110 are calibrated properly, the processor can determine an operational status and if they are not calibrated properly, the processor can determine a non-operational status. To make this determination, the same inspection described above can be carried out by performing one full rotation of the test/calibration asset to validate the coupling of the plurality of sensors 145a-145c, 150a-150c on the test/calibration asset. Once coupling is validated, the inspection can further include performing a second full rotation of the test/calibration asset to obtain inspection measurements. The inspection measurements obtained from the test/calibration asset by the first and second inspection apparatuses 105, 110 can be compared, by the processor, to the known specifications and defects of the test/calibration asset to determine whether or not the first and second inspection apparatuses 105, 110 are properly calibrated.

In some embodiments, the computing system can further be configured to determine the operational/non-operational status by checking individual components of the first inspection apparatus 105 and the second inspection apparatus 110, individually. For example, in some embodiments, the inspection system 100 can further include a variety of sensors configured to monitor the status of the first and second inspection apparatuses 105, 110, including robotic arms 115, 120, and inspection units 125, 130. The sensors that can be used to monitor the status of the first and second inspection apparatuses 105, 110 can include, for example, vibration sensors, temperature sensors, pressure sensors, proximity sensors, accelerometers, cameras, etc. In this case, the various sensors described above can be communicatively coupled to the processor of the inspection system 100, to allow for the processor to determine the status of the first and second inspection apparatuses 105, 110. In some embodiments, the status can be determined by visually inspecting the status of the robotic arms 115, 120, the inspection units 125, 130 (including the plurality of sensors 145a-145c and 150a-150c) and the connections 135, 140.

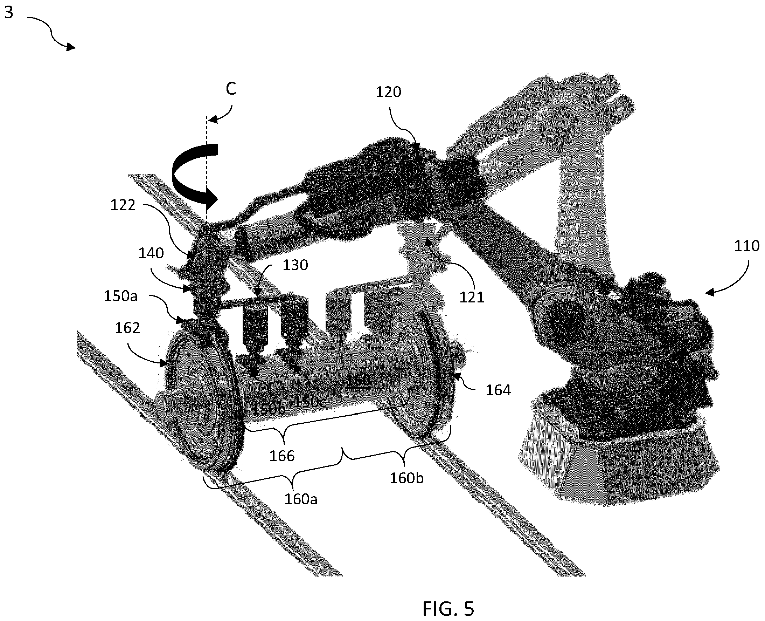

FIG. 5 is a perspective view of a configuration 3 of the inspection system 100, illustrating the case where one of the inspection apparatuses (e.g., inspection apparatus 105) is non-operational. As shown in FIG. 5, in the case of a technical failure, or if maintenance is required on the first inspection apparatus 105 or the second inspection apparatus 110, resulting in a temporary loss of an inspection apparatus 105, 110, the remaining operational inspection apparatus 105, 110 can be configured to complete the inspection of the asset 160 individually. This capability advantageously allows the inspection system 100 to avoid a complete leakage/standstill of inspection, further allowing for maintenance and repair to be completed on the inspection system 100 in parallel to inspection, providing system flexibility.

For example, in a case where any of the status checks described above result in a non-operational status of the first inspection apparatus 105 or the first inspection apparatus experiences a technical failure, or is non-operational due to maintenance/repair, the second inspection apparatus 110 can be configured to carry out the inspection of the asset 160 individually. In this case, during an inspection, similarly to as described above, the second inspection apparatus 110 can be configured to move the robotic arm 120 to a first position 121 to couple to the second portion 160b of the asset 160. Once the second inspection apparatus 110 is properly aligned with the second portion 160b, the second plurality of sensors 150a-150c can be configured to couple to the second portion 160b of the asset 160 to begin an inspection. Specifically, the sensor 150a can be configured to couple to the second wheel portion 164 to inspect the wheel portion 164, and the sensor 150b, 150c can be configured to couple to the axle 166 to the second portion 160b of the asset 160. Similarly to as described above, in some embodiments, some or all of the sensors 150a-150c can use a coupling medium (e.g., water) to effectively couple to the asset 160. Once the second plurality of sensors 150a-150c are coupled to the second portion 160b, the system 100 can be configured to validate the coupling of the second plurality of sensors 150a-150c by performing one full rotation of the asset 160. Once coupling is validated, the inspection can further include performing a second full rotation of the asset 160 to obtain inspection measurements of the second portion 160b. Once the inspection is completed, the second inspection apparatus 110 can be configured to move the robotic arm 120 to a second position 122 and rotate the inspection unit 130 about an axis C of the connection 140, to couple to the first portion 160a of the asset 160. Once the robotic arm 120 is properly positioned in the second position 122, the second plurality of sensors 150a-150c can be configured to couple to the first portion 160a of the asset 160 to begin an inspection first portion 160a. Specifically, the sensor 150a can be configured to couple to the first wheel portion 162 to inspect the wheel portion 162, and the sensor 150b, 150c can be configured to couple to the axle 166 to the first portion 160a of the asset 160. Similarly to as described above, in some embodiments, some or all of the sensors 150a-150c can use a coupling medium (e.g., water) to effectively couple to the asset 160. Once the second plurality of sensors 150a-150c are coupled to the first portion 160a, the system 100 can be configured to validate the coupling of the second plurality of sensors 150a-150c by performing a third full rotation of the asset 160. Once coupling is validated, the inspection can further include performing a fourth full rotation of the asset 160 to obtain inspection measurements of the first portion 160a.

Further, in some embodiments, both the first and second inspection apparatuses 105, 110 can be configured to carry out the individual inspection of the asset 160, as described above in reference to FIG. 5. By having both the first and second inspection apparatuses perform the inspection individually, the redundant inspection system 100 can compare the like measurements from the first plurality of sensors 145a-145c to the like measurements from the second plurality of sensors 150a-150c to determine the status of both the first and second inspection apparatuses 105, 110. In this case, after the first and second inspection apparatuses 105, 110 both inspect the first portion and the second portion 160a, 160b of the asset 160, the computing system of the inspection system 100 can be configured to compare the measurements of the first portion 160a taken from the first plurality of sensors 145a-145c to the measurements of the first portion 160a taken from the second plurality of sensors 150a-150c. In a case where the asset 160 is be a test/calibration asset having known specifications and defects, the computing system can also be configured to compare the measurements to the known specifications and defects of the test/calibration asset 160. If the computing system determines that measurements are within a predefined uncertainty from the known specifications and defects of the test/calibration asset 160, then it can be determined that both the first and second inspection apparatuses 105, 110 are operating properly. However, if a difference between the measurements being compared is greater than a predefined percentage, or if the measurements deviate from the known specifications of the test/calibration asset 160, then it can be determined that one or both if the inspection apparatuses are not operating properly and that maintenance or repair is required. Accordingly, in the event that one of the inspection apparatuses 105, 110 requires maintenance or repair, it is an advantage of the redundant inspection system 100 described herein, that the system can continue to perform inspections while one of the inspection apparatuses 105, 110 is being repaired.

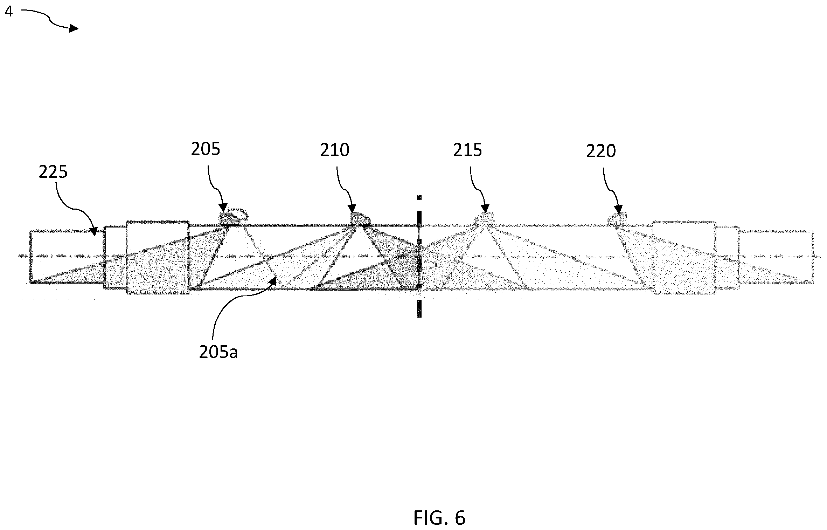

FIG. 6 is a diagram illustrating a configuration 4 of a plurality of sensors 205, 210, 215 and 220 of an inspection system (e.g., the inspection system 100) coupled to an asset 225. In the diagram 200, the asset 225 can be an axel of a wheel and the plurality of sensors 205, 210, 215 and 220 can coupled to the asset 225 to perform ultrasonic testing, or the like, on the asset. In some embodiments, the sensors 205 and 210 can be a part of a first inspection unit of a first inspection apparatus (e.g., inspection apparatus 105) and the sensors 215 and 220 can be a part of a second inspection unit of a second inspection apparatus (e.g., inspection apparatus 110). Once the sensors are coupled to the asset, the sensors can be configured to use a coupling medium (e.g., water, or any other couplant known in the art) to couple to the asset. Sensors 205 and 210, being a part of the same inspection apparatus (e.g., inspection apparatus 105), can be configured to validate their coupling to the asset 225, and inspect the asset 225, by alternating transmitting and receiving ultrasonic signals (e.g., 205a) to one another, through the asset 225. If the sensors 205, 210 are coupled to the asset 225 properly, the signal 205a, transmitted by sensor 205 will be heard by the sensor 210, and thus coupling can be validated. If on the other hand, the signal 205a is not received by sensor 210, then the inspection system can report a coupling error. A similar coupling validation procedure can be carried out by the sensors 215 and 220, which are a part of the same inspection apparatus (e.g., inspection apparatus 110). In some embodiments, the coupling validation can be executed by the processor of the inspection system digitally. In some cases, the coupling validation can be provided by the processor as a value between 0 and 1, with 0 indicating no coupling, and 1 indicating complete coupling. For example, in some cases, the processor may determine that the sensors 205, 210 of an inspection apparatus have a coupling of 0.8 (or 80%). This can indicate that 80% of the ultrasonic signals being transmitted between the sensors 205, 210 and the asset 225 successfully propagate into the asset, while approximately 20% of the energy is lost or attenuated (e.g., due to surface roughness, lack of couplant, irregularities, the presence of contaminants, etc.). To improve coupling and minimize attenuation, users may take various steps such as using coupling agents (e.g., water, gel, or oil) to enhance contact between the sensor and the asset, optimizing the transducer frequency and angle of incidence, and ensuring proper surface preparation to achieve better contact between the sensor and the material. Additionally, the inspection systems described herein can perform transfer correction correct for the above mentioned attenuation and minimize the influence of coupling variations on the measurements taken by each of the inspection units (e.g., inspection units 125, 130) of the inspection system. Transfer correction can be performed for each of the inspection units during a calibration process. Once calibrated, the inspection units can be used to inspect the asset 225, and any discrepancies due to coupling variations for each inspection unit can be adjusted based on the calibration data for each of the inspection units independently, using the measurements from the sensors 205, 210 and 215, 220, respectively. This can ensure accurate and reliable results for each inspection unit, independently from one another.

By having the inspection units (e.g., inspection units 105, 110) validate their own coupling independently of one another, using sensors 205, 210 and 215, 220, respectively, inspections can be carried out by inspection units (e.g., inspection units 105, 110) either in parallel, or independently.

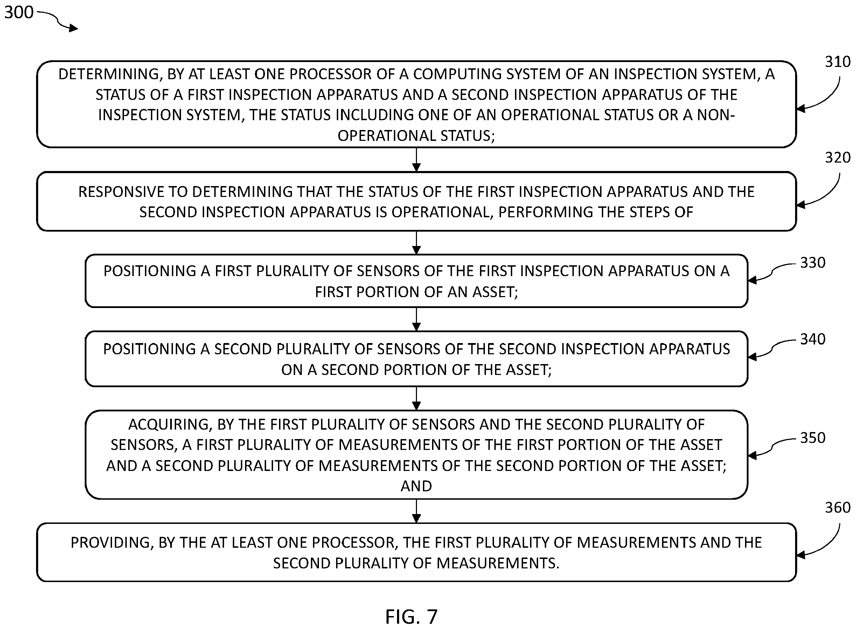

FIG. 7 is a flow diagram illustrating a method 300 of operating an inspection system as described herein (e.g., inspection system 100 of FIG. 1). In some embodiments, the method 300 can include a step 310 of determining, by at least one processor of a computing system of an inspection system, the status of a first inspection apparatus and a second inspection apparatus of the inspection system. The first inspection apparatus can be similar to the first inspection apparatus 105 of FIG. 1, and the second inspection apparatus can be similar to the second inspection apparatus 110 of FIG. 1. The status can include one of an operational status or a non-operational status. In some embodiments, the status can be determined by checking, by the processor a status of individual components of the first inspection apparatus and the second inspection apparatus, individually. For example, in some embodiments, the inspection system 100 can further include a variety of sensors configured to monitor the status of the first and second inspection apparatuses 105, 110, including robotic arms 115, 120, and inspection units 125, 130. The sensors that can be used to monitor the status of the first and second inspection apparatuses 105, 110 can include, for example, vibration sensors, temperature sensors, pressure sensors, proximity sensors, accelerometers, cameras, etc. In this case, the various sensors described above can be communicatively coupled to the processor of the inspection system 100, to allow for the processor to determine the status of the first and second inspection apparatuses 105, 110. In some embodiments, the status can be determined by visually inspecting the status of the robotic arms 115, 120, the inspection units 125, 130 (including the plurality of sensors 145a-145c and 150a-150c) and the connections 135, 140. For example, in some embodiments, the status for each inspection apparatus 105, 110 can be determined by acquiring measurements of a calibration object (e.g., a test wheel having known specifications and defects) using both inspection apparatuses and comparing the measurements from both apparatuses 105, 110 to the known specifications of the calibration object, as described above.

In some embodiments, the method 300 can further include positioning the first plurality of sensors of the first inspection apparatus on the second portion of an asset and positioning the second plurality of sensors of the second inspection apparatus on the first portion of the asset. The method can also include acquiring, by the first plurality of sensors and the second plurality of sensors, a third plurality of measurements of the first portion of the asset and a fourth plurality of measurements of the second portion of the asset. The method can also include comparing, by the at least one processor, the first plurality of measurements to the third plurality of measurements, and the second plurality of measurements to the fourth plurality of measurements and determining, by at least one processor, the status of the first inspection apparatus and the second inspection apparatus based on the comparing.

Responsive to determining that the status of the first inspection apparatus and the second inspection apparatus is operational, at 320, the method 300 can further include a step 330 of positioning the first plurality of sensors of the first inspection apparatus on a first portion of the asset (e.g., asset 160 of FIG. 1). Responsive to determining that the status of the first inspection apparatus and the second inspection apparatus is operational, at 320, the method 300 can further include a step 340 of positioning the second plurality of sensors of the second inspection apparatus on a second portion of the asset. The method 300 can further include a step 350 of acquiring, by the first plurality of sensors and the second plurality of sensors, a first plurality of measurements of the first portion of the asset and a second plurality of measurements of the second portion of the asset. The method 300 can also include a step 360 of providing, by the at least one processor, the first plurality of measurements and the second plurality of measurements. In some embodiments, the first plurality of measurements and the second plurality of measurements can be provided to a user interface display, the details of which are described below.

In some embodiments, the asset being inspected can be a wheel (e.g., a wheel of a high speed train) having a first wheel, a second wheel, and an axel extending there between. In this case, the method 300 can further include positioning the first plurality of sensors on the first wheel and a first half of the axel at a first angle relative to a vertical axis extending perpendicularly to a central axis of the axel. The method can also include positioning the second plurality of sensors on the second wheel and a second half of the axel at a second angle relative to a vertical axis extending perpendicularly to a central axis of the axel, wherein the second angle is different from the first angle. An example of this configuration can be seen above in reference to FIG. 3B.

In some cases, it may be determined that the status of one of the inspection apparatuses is non-operational, either due to a broken component, improper calibration or some other issue. In this case, for example, responsive to determining that the status of the second inspection apparatus is non-operational, the method can also include the steps of positioning the first plurality of sensors of the first inspection apparatus on the first portion of the asset and acquiring, by the first plurality of sensors, the first plurality of measurements of the first portion of the asset. The method can also include a step of positioning the first plurality of sensors of the first inspection apparatus on the second portion of the asset and acquiring, by the first plurality of sensors, the second plurality of measurements of the first portion of the asset.

In some embodiments, for example, when the first and second plurality of sensors are ultrasonic transducers, the method can further include a step of providing a coupling medium between the first plurality of sensors and the first portion of the asset and between the second plurality of sensors and the second portion of the asset. In some embodiments, the coupling medium can be water, or any other coupling medium known in the art. Further, in some embodiments, the coupling medium can be provided between the first plurality of sensors and the first portion of the asset and between the second plurality of sensors and the second portion of the asset by a couplant delivery system of the first and second inspection apparatuses.

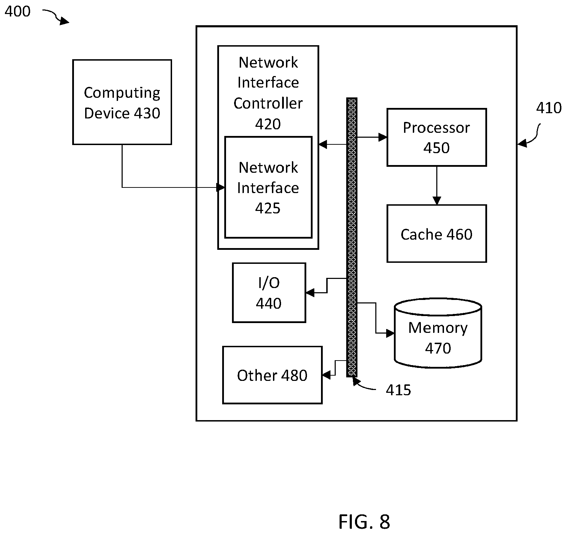

FIG. 8 is a block diagram 400 of a computing system 410 suitable for use in implementing the computerized components described herein, such as the inspection apparatus 100. In broad overview, the computing system 410 includes at least one processor 450 for performing actions in accordance with instructions, and one or more memory devices 460 and/or 470 for storing instructions and data. The illustrated example computing system 410 includes one or more processors 450 in communication, via a bus 415, with memory 470 and with at least one network interface controller 420 with a network interface 425 for connecting to external devices 430, e.g., a computing device. The one or more processors 450 are also in communication, via the bus 415, with each other and with any I/O devices 430 at one or more I/O interfaces 430, and any other devices 480. The processor 450 illustrated incorporates, or is directly connected to, cache memory 460. Generally, a processor will execute instructions received from memory. In some embodiments, the computing system 410 can be configured within a cloud computing environment, a virtual or containerized computing environment, and/or a web-based microservices environment.

In more detail, the processor 450 can be any logic circuitry that processes instructions, e.g., instructions fetched from the memory 470 or cache 460. In many embodiments, the processor 450 is an embedded processor, a microprocessor unit or special purpose processor. The computing system 410 can be based on any processor, e.g., suitable digital signal processor (DSP), or set of processors, capable of operating as described herein. In some embodiments, the processor 450 can be a single core or multi-core processor. In some embodiments, the processor 450 can be composed of multiple processors.

The memory 470 can be any device suitable for storing computer readable data. The memory 470 can be a device with fixed storage or a device for reading removable storage media. Examples include all forms of non-volatile memory, media and memory devices, semiconductor memory devices (e.g., EPROM, EEPROM, SDRAM, flash memory devices, and all types of solid state memory), magnetic disks, and magneto optical disks. A computing device 410 can have any number of memory devices 470.

The cache memory 460 is generally a form of high-speed computer memory placed in close proximity to the processor 450 for fast read/write times. In some implementations, the cache memory 460 is part of, or on the same chip as, the processor 450.

The network interface controller 420 manages data exchanges via the network interface 425. The network interface controller 420 handles the physical, media access control, and data link layers of the Open Systems Interconnect (OSI) model for network communication. In some implementations, some of the network interface controller's tasks are handled by the processor 450. In some implementations, the network interface controller 420 is part of the processor 450. In some implementations, a computing device 410 has multiple network interface controllers 420. In some implementations, the network interface 425 is a connection point for a physical network link, e.g., an RJ 45 connector. In some implementations, the network interface controller 420 supports wireless network connections via network interface port 425. Generally, a computing device 410 exchanges data with other network devices 430, such as computing device 430, via physical or wireless links to a network interface 425. In some implementations, the network interface controller 420 implements a network protocol such as LTE, TCP/IP Ethernet, IEEE 802.11, IEEE 802.16, or the like.

The other computing devices 430 are connected to the computing device 410 via a network interface port 425. The other computing device 430 can be a peer computing device, a network device, or any other computing device with network functionality. For example, a computing device 430 can be a remote controller, or a remote display device configured to communicate and operate the inspection apparatus 100. In some embodiments, a computing device 430 can include a server or a network device such as a hub, a bridge, a switch, or a router, connecting the computing device 410 to a data network such as the Internet.

In some uses, the I/O interface 440 supports an input device and/or an output device (not shown). In some uses, the input device and the output device are integrated into the same hardware, e.g., as in a touch screen. In some uses, such as in a server context, there is no I/O interface 440 or the I/O interface 440 is not used. In some uses, additional other components 480 are in communication with the computer system 410, e.g., external devices connected via a universal serial bus (USB).

The other devices 480 can include an I/O interface 440, external serial device ports, and any additional co-processors. For example, a computing system 410 can include an interface (e.g., a universal serial bus (USB) interface, or the like) for connecting input devices (e.g., a keyboard, microphone, mouse, or other pointing device), output devices (e.g., video display, speaker, refreshable Braille terminal, or printer), or additional memory devices (e.g., portable flash drive or external media drive). In some implementations an I/O device is incorporated into the computing system 410, e.g., a touch screen on a tablet device. In some implementations, a computing device 410 includes an additional device 480 such as a co-processor, e.g., a math co-processor that can assist the processor 450 with high precision or complex calculations.

Certain exemplary embodiments have been described to provide an overall understanding of the principles of the structure, function, manufacture, and use of the systems, devices, and methods disclosed herein. One or more examples of these embodiments have been illustrated in the accompanying drawings. Those skilled in the art will understand that the systems, devices, and methods specifically described herein and illustrated in the accompanying drawings are non-limiting exemplary embodiments and that the scope of the present invention is defined solely by the claims. The features illustrated or described in connection with one exemplary embodiment may be combined with the features of other embodiments. Such modifications and variations are intended to be included within the scope of the present invention. Further, in the present disclosure, like-named components of the embodiments generally have similar features, and thus within a particular embodiment each feature of each like-named component is not necessarily fully elaborated upon.

The subject matter described herein can be implemented in analog electronic circuitry, digital electronic circuitry, and/or in computer software, firmware, or hardware, including the structural means disclosed in this specification and structural equivalents thereof, or in combinations of them. The subject matter described herein can be implemented as one or more computer program products, such as one or more computer programs tangibly embodied in an information carrier (e.g., in a machine-readable storage device), or embodied in a propagated signal, for execution by, or to control the operation of, data processing apparatus (e.g., a programmable processor, a computer, or multiple computers). A computer program (also known as a program, software, software application, or code) can be written in any form of programming language, including compiled or interpreted languages, and it can be deployed in any form, including as a stand-alone program or as a module, component, subroutine, or other unit suitable for use in a computing environment. A computer program does not necessarily correspond to a file. A program can be stored in a portion of a file that holds other programs or data, in a single file dedicated to the program in question, or in multiple coordinated files (e.g., files that store one or more modules, sub-programs, or portions of code). A computer program can be deployed to be executed on one computer or on multiple computers at one site or distributed across multiple sites and interconnected by a communication network.

The processes and logic flows described in this specification, including the method steps of the subject matter described herein, can be performed by one or more programmable processors executing one or more computer programs to perform functions of the subject matter described herein by operating on input data and generating output. The processes and logic flows can also be performed by, and apparatus of the subject matter described herein can be implemented as, special purpose logic circuitry, e.g., an FPGA (field programmable gate array) or an ASIC (application-specific integrated circuit).

Processors suitable for the execution of a computer program include, by way of example, both general and special purpose microprocessors, and any one or more processor of any kind of digital computer. Generally, a processor will receive instructions and data from a read-only memory or a random access memory or both. The essential elements of a computer are a processor for executing instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. Information carriers suitable for embodying computer program instructions and data include all forms of non-volatile memory, including by way of example semiconductor memory devices, (e.g., EPROM, EEPROM, and flash memory devices); magnetic disks, (e.g., internal hard disks or removable disks); magneto-optical disks; and optical disks (e.g., CD and DVD disks). The processor and the memory can be supplemented by, or incorporated in, special purpose logic circuitry.

To provide for interaction with a user, the subject matter described herein can be implemented on a computer having a display device, e.g., a touch-screen display, a cathode ray tube (CRT) or liquid crystal display (LCD) monitor, for receiving inputs and for displaying information to the user and a keyboard and a pointing device, (e.g., a mouse or a trackball), by which the user can provide input to the computer. Other kinds of devices can be used to provide for interaction with a user as well. For example, feedback provided to the user can be any form of sensory feedback, (e.g., visual feedback, auditory feedback, or tactile feedback), and input from the user can be received in any form, including acoustic, speech, or tactile input.

The techniques described herein can be implemented using one or more modules. As used herein, the term "module" refers to computing software, firmware, hardware, and/or various combinations thereof. At a minimum, however, modules are not to be interpreted as software that is not implemented on hardware, firmware, or recorded on a non-transitory processor readable recordable storage medium (i.e., modules are not software *per se*). Indeed "module" is to be interpreted to always include at least some physical, non-transitory hardware such as a part of a processor or computer. Two different modules can share the same physical hardware (e.g., two different modules can use the same processor and network interface). The modules described herein can be combined, integrated, separated, and/or duplicated to support various applications. Also, a function described herein as being performed at a particular module can be performed at one or more other modules and/or by one or more other devices instead of or in addition to the function performed at the particular module. Further, the modules can be implemented across multiple devices and/or other components local or remote to one another. Additionally, the modules can be moved from one device and added to another device, and/or can be included in both devices.

The subject matter described herein can be implemented in a computing system that includes a back-end component (e.g., a data server), a middleware component (e.g., an application server), or a front-end component (e.g., a client computer having a graphical user interface or a web browser through which a user can interact with an implementation of the subject matter described herein), or any combination of such back-end, middleware, and front-end components. The components of the system can be interconnected by any form or medium of digital data communication, e.g., a communication network. Examples of communication networks include a local area network ("LAN") and a wide area network ("WAN"), e.g., the Internet.

Approximating language, as used herein throughout the specification and claims, may be applied to modify any quantitative representation that could permissibly vary without resulting in a change in the basic function to which it is related. Accordingly, a value modified by a term or terms, such as "about," "approximately," and "substantially," are not to be limited to the precise value specified. In at least some instances, the approximating language may correspond to the precision of an instrument for measuring the value. Here and throughout the specification and claims, range limitations may be combined and/or interchanged, such ranges are identified and include all the sub-ranges contained therein unless context or language indicates otherwise.

One skilled in the art will appreciate further features and advantages of the invention based on the above-described embodiments. Accordingly, the present application is not to be limited by what has been particularly shown and described, except as indicated by the appended claims. All publications and references cited herein are expressly incorporated by reference in their entirety.

## Claims

1. An inspection system comprising:
a first inspection apparatus comprising
a first robotic arm; and
a first inspection unit rotably coupled to the first robotic arm at a first connection, wherein the first inspection unit includes a first plurality of sensors configured to inspect at least first portion of an asset; and
a second inspection apparatus comprising
a second robotic arm; and
a second inspection unit rotably coupled to the second robotic arm at a second connection, wherein the second inspection unit includes a second plurality of sensors configured to inspect at least a second portion of the asset.

2. The inspection system of claim 1, wherein the first plurality of sensors and the second plurality of sensors each comprise at least one of an ultrasonic probe, an eddy current probe and a camera.

3. The inspection system of claim 1, wherein first inspection apparatus and the second inspection apparatus are identical and are each configured to inspect the first portion of the asset and the second portion of the asset.

4. The inspection system of claim 1, further comprising a computing system including at least one data processor and a memory storing instructions which, when executed by the at least one processor, cause the at least one processor to perform operations including:
determining a status of the first inspection apparatus and the second inspection apparatus of the inspection system, the status including one of an operational status or a non-operational status;
responsive to determining that the status of the first inspection apparatus and the second inspection apparatus is operational, performing the steps of
positioning, by the first robotic arm, the first plurality of sensors on the first portion of an asset;
positioning, by the second robotic arm, the second plurality of sensors on the second portion of the asset;
acquiring, by the first plurality of sensors and the second plurality of sensors, a first plurality of measurements of the first portion of the asset and a second plurality of measurements of the second portion of the asset; and
providing, by the at least one processor, the first plurality of measurements and the second plurality of measurements.

5. The inspection system of claim 4, wherein the first inspection apparatus and the second inspection apparatus further comprise at least one monitoring sensor including at least one of a vibration sensor, a temperature sensor, a pressure sensor, a proximity sensor, an accelerometer, and a camera, communicatively coupled to the computing system and configured to monitor the status of the first inspection apparatus and the second inspection apparatus, wherein the at least one processor to perform operations further including:
receiving, from the at least one monitoring sensor, data characterizing the status of the first inspection apparatus and the second inspection apparatus.

6. The inspection system of claim 4, wherein the at least one processor is configured to perform operations further comprising:
responsive to determining that the status of the second inspection apparatus is non-operational, performing the steps of
positioning, by the first robotic arm, the first plurality of sensors of the first inspection apparatus on the first portion of the asset;
acquiring, by the first plurality of sensors, the first plurality of measurements of the first portion of the asset;
positioning, by the first robotic arm, the first plurality of sensors of the first inspection apparatus on the second portion of the asset; and
acquiring, by the first plurality of sensors, the second plurality of measurements of the first portion of the asset.

7. The inspection system of claim 4, wherein the at least one processor is configured to perform operations further comprising:
positioning, by the first robotic arm, the first plurality of sensors of the first inspection apparatus on the second portion of an asset;
positioning by the second robotic arm, the second plurality of sensors of the second inspection apparatus on the first portion of the asset;
acquiring, by the first plurality of sensors and the second plurality of sensors, a third plurality of measurements of the first portion of the asset and a fourth plurality of measurements of the second portion of the asset;
comparing, by the at least one processor, the first plurality of measurements to the third plurality of measurements, and the second plurality of measurements to the fourth plurality of measurements; and
determining, by at least one processor, the status of the first inspection apparatus and the second inspection apparatus based on the comparing.

8. The inspection system of claim 4, wherein the at least one processor is configured to perform operations further comprising:
providing, by the first inspection unit, a coupling medium between the first plurality of sensors and the first portion of the asset; and
providing, by the second inspection unit, the coupling medium between the second plurality of sensors and the second portion of the asset.

9. The inspection system of claim 4, wherein the asset is a wheel, including a first wheel, a second wheel, and an axel extending there between, and the at least one processor is configured to perform operations further comprising:
positioning, by the first robotic arm, the first plurality of sensors on the first wheel and a first half of the axel at a first angle relative to a vertical axis extending perpendicularly to a central axis of the axel; and
positioning, by the second robotic arm, the second plurality of sensors on the second wheel and a second half of the axel at a second angle relative to a vertical axis extending perpendicularly to a central axis of the axel, wherein the second angle is different from the first angle.

10. A method comprising:
determining, by at least one processor of a computing system of an inspection system, a status of a first inspection apparatus and a second inspection apparatus of the inspection system, the status including one of an operational status or a non-operational status, wherein the first inspection apparatus includes a first robotic arm and a first inspection unit rotably coupled to the first robotic arm at a first connection, the first inspection unit including a first plurality of sensors and the second inspection apparatus includes a second robotic arm and a second inspection unit rotably coupled to the second robotic arm at a second connection, the second inspection unit including a second plurality of sensors;
responsive to determining that the status of the first inspection apparatus and the second inspection apparatus is operational, performing the steps of
positioning, by the first robotic arm, the first plurality of sensors on a first portion of an asset;
positioning, by the second robotic arm, the second plurality of sensors of the second inspection apparatus on a second portion of the asset;
acquiring, by the first plurality of sensors and the second plurality of sensors, a first plurality of measurements of the first portion of the asset and a second plurality of measurements of the second portion of the asset; and
providing, by the at least one processor, the first plurality of measurements and the second plurality of measurements.

11. The method of claim 10, wherein the first inspection apparatus and the second inspection apparatus further include at least one monitoring sensor including at least one of a vibration sensor, a temperature sensor, a pressure sensor, a proximity sensor, an accelerometer, and a camera, communicatively coupled to the computing system and configured to monitor the status of the first inspection apparatus and the second inspection apparatus, the method further comprising:
receiving, from the at least one monitoring sensor, data characterizing the status of the first inspection apparatus and the second inspection apparatus.

12. The method of claim 10, further comprising:
responsive to determining that the status of the second inspection apparatus is non-operational, performing the steps of
positioning, by the first robotic arm, the first plurality of sensors of the first inspection apparatus on the first portion of the asset;
acquiring, by the first plurality of sensors, the first plurality of measurements of the first portion of the asset;
positioning, by the first robotic arm, the first plurality of sensors of the first inspection apparatus on the second portion of the asset;
acquiring, by the first plurality of sensors, the second plurality of measurements of the first portion of the asset.

13. The method of claim 10, further comprising:
positioning, by the first robotic arm, the first plurality of sensors of the first inspection apparatus on the second portion of an asset;
positioning, by the second robotic arm, the second plurality of sensors of the second inspection apparatus on the first portion of the asset;
acquiring, by the first plurality of sensors and the second plurality of sensors, a third plurality of measurements of the first portion of the asset and a fourth plurality of measurements of the second portion of the asset;
comparing, by the at least one processor, the first plurality of measurements to the third plurality of measurements, and the second plurality of measurements to the fourth plurality of measurements; and
determining, by at least one processor, the status of the first inspection apparatus and the second inspection apparatus based on the comparing.

14. The method of claim 10, further comprising:
providing a coupling medium between the first plurality of sensors and the first portion of the asset; and
providing the coupling medium between the second plurality of sensors and the second portion of the asset.

15. The method of claim 10, wherein the asset is a wheel, including a first wheel, a second wheel, and an axel extending there between, the method further comprising:
positioning, by the first robotic arm, the first plurality of sensors on the first wheel and a first half of the axel at a first angle relative to a vertical axis extending perpendicularly to a central axis of the axel; and
positioning, by the second robotic arm, the second plurality of sensors on the second wheel and a second half of the axel at a second angle relative to a vertical axis extending perpendicularly to a central axis of the axel, wherein the second angle is different from the first angle.

16. A non-transitory computer readable medium storing computer readable instructions, which when executed by a data processor cause the data processor to perform operations comprising:
determining a status of a first inspection apparatus and a second inspection apparatus of the inspection system, the status including one of an operational status or a non-operational status, wherein the first inspection apparatus includes a first robotic arm and a first inspection unit rotably coupled to the first robotic arm at a first connection, the first inspection unit including a first plurality of sensors and the second inspection apparatus includes a second robotic arm and a second inspection unit rotably coupled to the second robotic arm at a second connection, the second inspection unit including a second plurality of sensors;
responsive to determining that the status of the first inspection apparatus and the second inspection apparatus is operational, performing the steps of
positioning, by the first robotic arm, the first plurality of sensors of the first inspection apparatus on a first portion of an asset;
positioning, by the second robotic arm, a second plurality of sensors of the second inspection apparatus on a second portion of the asset;
acquiring, by the first plurality of sensors and the second plurality of sensors, a first plurality of measurements of the first portion of the asset and a second plurality of measurements of the second portion of the asset; and
providing the first plurality of measurements and the second plurality of measurements.

17. The non-transitory computer readable medium of claim 16, wherein the computer readable instructions, when executed by the data processor, cause the data processor to perform operations further comprising:
responsive to determining that the status of the second inspection apparatus is non-operational, performing the steps of
positioning, by the first robotic arm, the first plurality of sensors of the first inspection apparatus on the first portion of the asset;
acquiring, by the first plurality of sensors, the first plurality of measurements of the first portion of the asset;
positioning, by the second robotic arm, the first plurality of sensors of the first inspection apparatus on the second portion of the asset;
acquiring, by the first plurality of sensors, the second plurality of measurements of the first portion of the asset.

18. The non-transitory computer readable medium of claim 16, wherein the computer readable instructions, when executed by the data processor, cause the data processor to perform operations further comprising:
positioning, by the first robotic arm, the first plurality of sensors of the first inspection apparatus on the second portion of an asset;
positioning, by the second robotic arm the second plurality of sensors of the second inspection apparatus on the first portion of the asset;
acquiring, by the first plurality of sensors and the second plurality of sensors, a third plurality of measurements of the first portion of the asset and a fourth plurality of measurements of the second portion of the asset;
comparing, by the at least one processor, the first plurality of measurements to the third plurality of measurements, and the second plurality of measurements to the fourth plurality of measurements; and
determining, by at least one processor, the status of the first inspection apparatus and the second inspection apparatus based on the comparing.

19. The non-transitory computer readable medium of claim 16, wherein the computer readable instructions, when executed by the data processor, cause the data processor to perform operations further comprising:
providing a coupling medium between the first plurality of sensors and the first portion of the asset; and
providing the coupling medium between the second plurality of sensors and the second portion of the asset.

20. The non-transitory computer readable medium of claim 16, wherein the asset is a wheel, including a first wheel, a second wheel, and an axel extending there between, and the computer readable instructions, when executed by the data processor, cause the data processor to perform operations further comprising:
positioning, by the first robotic arm, the first plurality of sensors on the first wheel and a first half of the axel at a first angle relative to a vertical axis extending perpendicularly to a central axis of the axel; and
positioning, by the second robotic arm, the second plurality of sensors on the second wheel and a second half of the axel at a second angle relative to a vertical axis extending perpendicularly to a central axis of the axel, wherein the second angle is different from the first angle.
